# EUROPEAN PATENT APPLICATION

(11) **EP 3 576 159 A1**
(43) Date of publication of application: **04.12.2019**
(21) Application number: 18195466.0
(22) Date of filing: 19.09.2018
(51) Int. Cl.: H01L 31/02, H02S 40/34

(54) **Method and device for controlling solar energy system, central controller and solar energy system**

(30) Priority: 01.06.2018 CN 201810557032
(71) Applicant: Beijing Hanergy Solar Power Investment Co., Ltd., 101499 Beijing (CN)
(72) Inventor: XIAO, Ya'nan, BEIJING, Beijing 101499 (CN); PAN, Wei, BEIJING, Beijing 101499 (CN); LI, Haifeng, BEIJING, Beijing 101499 (CN); LI, Hongjie, BEIJING, Beijing 101499 (CN)
(74) Representative: Petit, Maxime

(57) **Abstract**

The present disclosure provides a method for controlling a solar energy system. The method includes: receiving component control information sent by an external control system; and executing a control operation corresponding to the component control information on a solar energy component (10) connected to a junction box (13) according to the component control information. A device for controlling a solar energy system, a central controller (11) and a solar energy system are also provided.

## Description

### TECHNICAL FILED

The present disclosure relates to, but is not limited to solar energy technology, and more particularly to a method and device for controlling a solar energy system, a central controller and a solar energy system.

### BACKGROUND

Building integrated photovoltaic (BIPV) is a technology that integrates solar power generation products on a building. Solar energy components are used to integrate solar energy curtain walls, lighting roofs, etc., on the building.

Currently, for the BIPV technology, generally, a solar power generation system is mounted on the outer surface of a building envelop structure of the building. Solar energy is converted by the solar power generation system to provide electric power. The solar power generation system comprises the solar energy components and a junction box. A plurality of solar energy components is connected in series or in parallel, and is finally gathered by the junction box to form the solar power generation system.

However, the maintenance and overhaul of the above solar power generation system completely depend on manpower, the system is difficult to maintain, and the system safety and reliability are not high.

### SUMMARY

The present disclosure provides a method and device for controlling a solar energy system, a central controller and a solar energy system. Subject matter of the present disclosure is summarized below. The summary is not intended to limit the protection scope indicated by the claims.

In a first aspect, there is provided a method for controlling a solar energy system in embodiments of the present disclosure. The method includes:
receiving component control information sent by an external control system; and
executing a control operation corresponding to the component control information on a solar energy component connected to a junction box according to the component control information.

In a possible implementation, executing a control operation corresponding to the component control information on a solar energy component connected to a junction box according to the component control information comprises:
analyzing the component control information, and determining a component to be controlled corresponding to the component control information; and
executing the control operation corresponding to the component control information on the component to be controlled by a junction box associated with the component to be controlled.

In a possible implementation, the component control information comprises a component turn-off command, a component turn-on command, a status inquiry command or an abnormality detection command for the solar energy component.

In a possible implementation, the component control information is the component turn-off command; and executing a control operation corresponding to the component control information on a solar energy component connected to a junction box according to the component control information comprises:
determining a component to be turned off corresponding to the component turn-off command according to the component turn-off command; and
sending a turn-off command to the junction box connected to the component to be turned off, to disconnect the junction box from the component to be turned off; or
the component control information is a component turn-on command; and correspondingly, executing a control operation corresponding to the component control information on a solar energy component connected to a junction box according to the component control information comprises:
determining a component to be turned on corresponding to the component turn-on command according to the component turn-on command; and
sending a turn-on command to the junction box to which the component to be turned on is subordinate, to turn on the connection between the junction box and the component to be turned on.

In a possible implementation, the component control information is the component turn-off command, the component turn-off command contains a fire protection identification, and the external control system is a fire protection system; and correspondingly, executing a control operation corresponding to the component control information on a solar energy component connected to a junction box according to the component control information comprises:
determining that the component to be turned off corresponding to the component turn-off command is all solar energy components according to the fire protection identification; and
sending the turn-off command to all junction boxes, to disconnect all junction boxes from the respectively connected all solar energy components.

In a possible implementation, the method further comprises:
performing real-time monitoring on a local turn-off key; and
sending the turn-off command to all junction boxes when a component turn-off event triggered by the local turn-off key is monitored, to disconnect all junction boxes from the respectively connected all solar energy components.

In a possible implementation, the component control information is the status inquiry command; and correspondingly, executing a control operation corresponding to the component control information on a solar energy component connected to a junction box according to the component control information comprises:
determining a component to be inquired according to the status inquiry command according to the status inquiry command;
acquiring component status data corresponding to the component to be inquired from a junction box associated with the component to be inquired; and
sending the component status data to the external control system.

In a possible implementation, the method further comprises:
periodically acquiring the component status data from each junction box; and
storing the component status data in a local database, and uploading the component status data to the external control system.

In a possible implementation, the component control information is the abnormality detection command; and correspondingly, executing a control operation corresponding to the component control information on a solar energy component connected to a junction box according to the component control information comprises:
determining a component to be detected corresponding to the abnormality detection command according to the abnormality detection command;
sending a detection command to a junction box connected to the component to be detected, to cause the junction box to perform abnormality detection on the component to be detected; and
acquiring an abnormality detection result from the junction box connected to the component to be detected, and sending the abnormality detection result to the external control system.

In a possible implementation, the method further comprises:
periodically performing the abnormality detection on the solar energy component connected to each junction box; and
storing abnormality alarm information in the local database when the abnormality alarm information is detected, and uploading the abnormality alarm information to the external control system.

In a possible implementation, the external control system comprises a remote control system, and the method further comprises:
performing real-time monitoring on a network switchover button;
disconnecting the communication connection with the remote control system when a remote disconnection event triggered by the network switchover button is monitored; and
resuming the communication connection with the remote control system when a remote enablement event triggered by the network switchover button is monitored.

In a possible implementation, before receiving the component control information sent by the external control system, the method further comprises:
receiving network configuration information and synchronization information sent by the external control system;
performing networking configuration according to the network configuration information; and
synchronizing with the external control system according to the synchronization information.

In a second aspect, there is provided a device for controlling a solar energy system in embodiments of the present disclosure. The device comprises:
a receiving module, configured to receive component control information sent by an external control system; and
an execution control module, configured to execute control operation corresponding to the component control information on a solar energy component connected to a junction box according to the component control information.
In a possible implementation, the component control information is a component turn-off command, the component turn-off command contains a fire protection identification, and the external control system is a fire protection system; and correspondingly, the execution control module comprises:
a component determining unit, configured to determine that the component to be turned off corresponding to the component turn-off command is all solar energy components according to the fire protection identification; and
a fire protection turn-off unit, configured to send a turn-off command to all junction boxes, to disconnect all junction boxes from the respectively connected all solar energy components.

In a third aspect, there is provided a central controller in embodiments of the present disclosure. The central controller comprises a processor and a memory, wherein the memory stores at least one executable command, and the executable command is loaded and executed by the processor to implement the operations of the method for controlling a solar energy system in the first aspect or in any implementation of the first aspect.

In a fourth aspect, there is provided a solar energy system in embodiments of the present disclosure. The solar energy system comprises a plurality of solar energy components and at least one junction box, wherein each junction box is connected to at least one solar energy component; and the solar energy system further comprises the central controller in the third aspect;
the central controller is connected to the at least one junction box; and
the central controller is in communication connection with an external control system.

Other aspect within the protection scope of the present disclosure may be understood after reading the above summary and the comprehending the accompanying drawings and detailed description.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show merely some embodiments of the present disclosure, and reasonable variations of these accompanying drawings are also within the protection scope of the present disclosure.
FIG. 1 is a schematic diagram of a structure of a solar energy system according to an embodiment of the present disclosure;
FIG. 2 is a schematic diagram of a structure of a solar energy system according to an embodiment of the present disclosure;
FIG. 3 is a schematic diagram of a module of a central controller according to an embodiment of the present disclosure;
FIG. 4 is a flowchart of a method for controlling a solar energy system according to an embodiment of the present disclosure;
FIG. 5 is a flowchart illustrating the turn-off control over a solar energy component by a fire protection system according to an embodiment of the present disclosure;
FIG. 6 is a schematic diagram of a structure of a device for controlling a solar energy system according to an embodiment of the present disclosure; and
FIG. 7 is a schematic diagram of a structure of a device for controlling a solar energy system according to an embodiment of the present disclosure.

### DETAILED DESCRIPTION

The embodiments of the present disclosure will be described in further detail with reference to the accompanying drawings, to clearly present the objects, technical solutions, and advantages of the present disclosure. Apparently, the embodiments described some embodiments of the present disclosure, and are not representative of all embodiments consistent with the present disclosure. All other embodiments derived based on the embodiments of the present disclosure shall fall within the protection scope of the present disclosure.

Unless otherwise defined, technical terms or scientific terms used in the present disclosure should have the ordinary meaning understood by those of ordinary skill in the art. The words "first", "second" and similar terms used in the present disclosure do not denote any order, quantity, or importance, and are merely used to distinguish different components. The word "comprise" or similar terms mean that elements or objects appearing before the term cover the listed elements or objects appearing after the term and the equivalents of the listed elements or objects appearing after the term, while other elements or objects are not excluded. The word "connected" or "linked" and similar terms are not limited to physical or mechanical connections, and may include electrical or communication connection and the connection may be direct or indirect.

At present, the solar power generation system outside the building in the BIPV technology cannot realize the automatic control over solar energy components and junction boxes. The maintenance and overhaul of the system completely depends on manpower, the system is difficult to maintain, and the system safety and reliability are not high. On such basis, the present disclosure provides a method and device for controlling a solar energy system, a central controller, and a solar energy system, which are specifically described below in conjunction with the embodiments.

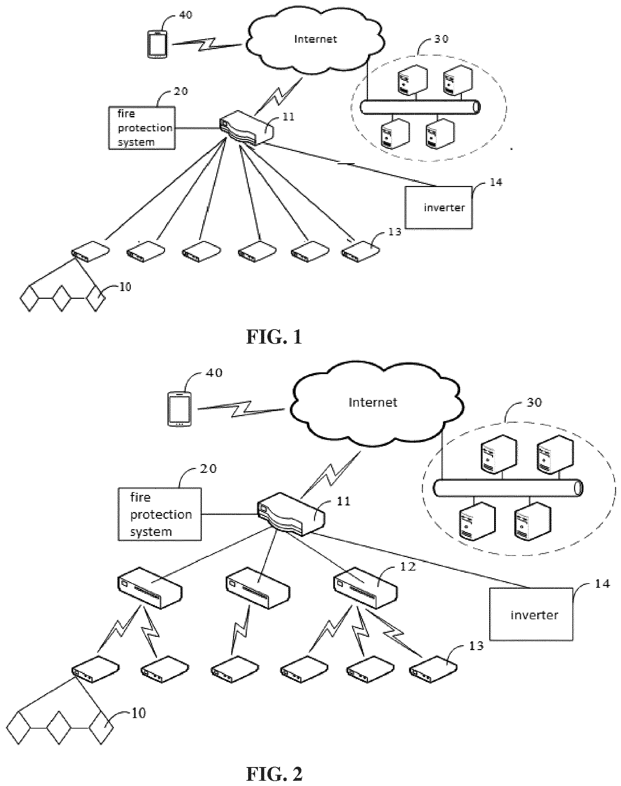

Referring to FIG. 1, an embodiment of the present disclosure provides a solar energy system comprising a plurality of solar energy components 10, at least one junction box 13 and a central controller 11. Each junction box 13 is connected to at least one solar energy component 10. The central controller 11 is connected to each junction box 13. The central controller 11 is in communication connection with an external control system.

Compared with the application scenario with a large number of solar energy components, the solar energy system as shown in FIG. 1 is more suitable for the application scenario with relatively small-scale solar energy components, for example a scenario where the number of the junction boxes 13 in the solar energy system is less than 100. In the scenario of the large number of solar energy components, the number of the junction boxes 13 is also large correspondingly. If all the junction boxes 13 are directly connected by the central controller 11, the amount of data needing to be processed by the central controller 11 will be very large, thereby seriously affecting the communication efficiency of the entire system. Therefore, as shown in FIG. 2, in the scenario where the number of the solar energy components is large, at least one local gateway 12 is additionally disposed in the solar energy system according to the embodiment of the present disclosure. Each local gateway 12 is respectively connected to the central controller 11 and at least one junction box 13. When the number of the junction boxes 13 in the solar energy system is large, the junction boxes 13 are grouped by the local gateway 12. The central controller 11 can realize the control over all the junction boxes 13 and all the solar energy components 10 by communicating with a relatively small number of local gateways 12.

In the embodiment of the present disclosure, the framework of the solar energy system as shown in FIG. 2 is mainly taken as a basis for explanation, so as to illustrate that the central controller 11 controls the solar energy components by the local gateway 12 and the junction box 13 in sequence, which are associated with the solar energy components. The difference between the solar energy system as shown in FIG. 1 and the solar energy system as shown in FIG. 2 in a component control process is that the central controller 11 of the solar energy system as shown in FIG. 1 directly sends a control command to the junction box 13, while the central controller 11 of the solar energy system as shown in FIG. 2 forwards the control command to the junction box 13 by the local gateway 12.

The external control system comprises a remote control system and a local control system. The remote control system is a system needing to be connected by the Internet, such as a server cluster 30 and a user terminal 40. The local control system is the built-in system in a place where the solar energy system is installed, such as a fire protection system 20 and a monitoring system. The server cluster 30 may be formed by multiple physical servers connected by Ethernet, or may be implemented in the form of a cloud server. The fire protection system 20 may be a circuit system for solving the fire problem inside a building site where the solar energy system is installed.

The central controller 11 is in communication connection with the remote control system such as the server cluster 30 and the user terminal 40 by the Internet based on the protocols of transmission control protocol/Internet protocol (TCP/IP), message queuing telemetry transport (MQTT), constrained application protocol (COAP), and the like. The remote automatic control over the solar energy system is realized by the communication connection between the central controller 11 and the remote control system such as the remote server or the user terminal 40.

The central controller 11 communicates with the local control system such as the fire protection system 20 or the monitoring system by an RS-485 bus or a Lon Works bus, thereby realizing the data communication with the local control system such as the fire protection system 20 or the monitoring system. Therefore, in the case of a fire accident or an earthquake disaster, etc., all the solar energy components 10 included in the solar energy system can be turned off in time by the fire protection system 20. The personnel electric shock caused by a high voltage generated by the solar energy components 10 connected to a power grid is avoided.

In the solar energy system as shown in FIG. 2, the central controller 11 communicates with each local gateway 12 by the RS-485 bus or the LoRa wireless data transmission technology, and forms a star network structure or a bus network structure with the local gateway 12. Each junction box 13 is in communication connection with the local gateway 12. The communication connection between the junction box 13 and the local gateway 12 may be the connection based on the mode of a ZigBee protocol or the RS-485 bus, etc. FIG. 2 schematically shows three local gateways 12, which are in communication connection with two, one and three junction boxes 13 respectively.

In the solar energy system as shown in FIG. 1, the central controller 11 is in communication connection with each junction box 13 by the RS-485 bus or the LoRa wireless data transmission technology, and forms a star network structure or a bus type network structure with the junction box 13. FIG. 1 schematically shows six junction boxes 13, and one of the junction boxes 13 is connected to three solar energy components 10 connected in series.

In addition, the central controller 11 as shown in FIGS. 1 and 2 is also in communication connection with an inverter 14. The remote automatic control over the inverter 14 can be realized by the remote server or the user terminal. The central controller 11 is designed based on embedded Linux, and is small in size, stable in stability, easier to adapt to the on-site network environment, and more flexible to be deployed and has rich network functions.

The junction boxes 13 used in the embodiment of the present disclosure are all smart junction boxes, can receive the control command issued by the local gateway 12 or the central controller 11, and execute the control operation corresponding to the control command. For example, the junction box 13 receives a turn-off command issued by the local gateway 12 to disconnect the electric connection between the junction box 13 and the associated solar energy components 10.

In the solar energy system as shown in FIG. 2, the communication links between the central controller 11, the local gateway 12 and the junction box circuit 13, and the communication link between the central controller 11 and the inverter 14 are called as downlink communication links. In the solar energy system as shown in FIG. 1, the communication link between the central controller 11 and the junction box circuit 13, and the communication link between the central controller 11 and the inverter 14 are called as the downlink communication links. In the solar energy system as shown in FIGS. 1 and 2, the communication links between the central controller 11 and the fire protection system 20, the server cluster 30, the Internet, or the user terminal 40 are called as uplink communication links. The two-way communication connection between the solar energy system and the external control system is realized by the downlink communication links and the uplink communication links.

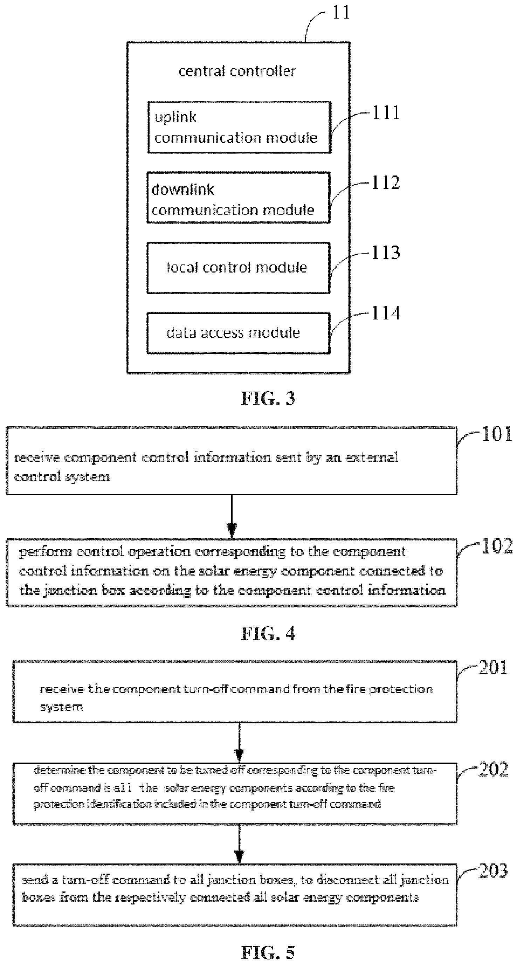

As shown in FIG. 3, FIG. 3 shows a structural block diagram of the central controller 11, the central controller 11 comprises an uplink communication module 111, a downlink communication module 112, a local control module 113, and a data access module 114.

In one example, the central controller 11 is correspondingly provided with a database. The above data access module 114 is responsible for storing and acquiring all data in the database. The database may store at least one of a system composition list, a central controller attribute table, a local gateway attribute table, a junction box circuit attribute table, an inverter attribute table, system composition parameters, component status data, anomaly status information and an operation log. The system composition list is used to record the device identifications of devices, such as the central controller, the local gateway, the junction box circuit and the inverter, as well as the information about the relationships between these devices. When the solar energy system does not comprise the local gateway 12, the local gateway attribute table is not stored in the database of the central controller 11, and the device identification of the local gateway and the relationship information between the local gateway and other devices are not recorded in the system composition list.

The uplink communication module 111 is mainly responsible for interacting with the external control system such as the fire protection system 20, the server cluster 30, and the user terminal 40, and is capable of interacting with other modules inside the central controller 11. The uplink communication module 111 comprises an Ethernet communication interface, an RS-485 communication interface adaptive to the fire protection system 20, and communication interfaces between the internal modules, so that any one of the above interactions can be implemented by a point-to-point communication mode.

In the solar energy system as shown in FIG. 2, the downlink communication module 112 is mainly responsible for interacting with the local gateway 12, or interacting with the local gateway 12 and the inverter 14, or interacting with the inverter 14, and interacts with the other modules inside the controller 11. The downlink communication module 112 comprises an RS-485 communication interface adaptive to the local gateway 12, a LoRa communication interface, and communication interfaces between the internal modules, and can implement point-to-point communication and point-to-multipoint communication, such as unicast polling and repeated broadcasting. In the solar energy system as shown in FIG. 1, the downlink communication module 112 is mainly responsible for interacting with the junction box 13 (and/or the inverter 14) and interacting with other modules inside the central controller 11. The downlink communication module 112 comprises an RS-485 communication interface adaptive to the junction box 13, a LoRa communication interface and communication interfaces between the internal modules, and can implement point-to-point communication and point-to-multipoint communication.

The local control module 113 is mainly responsible for processing the operation command from a user input device directly connected to the central controller 11. The user input device may be a button, a touch screen, a keyboard, etc., so that the user can manually operate the central controller 11 by these user input devices directly to achieve required application functions.

After the solar energy system is installed on the BIPV building, the solar energy system needs the initialization configuration such as parameter settings and network settings. By taking the solar energy system as shown in FIG. 2 as an example, network configuration information is sent to the central controller 11 by the external control system such as the server cluster 30 or the user terminal 40. The network configuration information comprises the central control configuration information corresponding to the central controller 11, the gateway configuration information corresponding to each local gateway 12 and the junction box configuration information corresponding to each junction box 13. The central control configuration information comprises first address information, first network parameter information, and second network parameter information. The first address information comprises the number of the gateways, the number of the junction boxes, the gateway address of each local gateway 12, the junction box address of each junction box 13, and the subordinate relationship information between the local gateway 12 and the junction box 13, which are included in the solar energy system. The above first network parameter information is the network parameters required for networking between the central controller 11 and the local gateway 12. The second network parameter information is the network parameters required for networking between the local gateway 12 and the junction box 13.

After receiving the above network configuration information, the central controller 11 firstly completes the initialization process per se according to the central control configuration information included in the network configuration information. The initialization process of the central controller 11 comprises that the central controller 11 analyzes the first address information into a fixed format, and permanently stores in a local database of the central controller 11, and the central controller 11 completes the configuration of a first network parameter thereon, and then analyzes the first network parameter and a second network parameter into a fixed format and permanently stores in the local database of the central controller 11.

The central controller 11 establishes the communication connection with each local gateway 12 after completing the configuration of the above first network parameter. For each local gateway 12, the central controller 11 sends the gateway configuration information corresponding to the local gateway 12 and the junction box configuration information corresponding to all the junction boxes 13 connected to the local gateway 12 to such local gateway 12. The above gateway configuration information comprises second address information, a third network parameter required for networking between the local gateway 12 and the central controller 11, and a fourth network parameter required for networking between all the junction boxes 13 subordinate to the local gateway 12 and such local gateway 12. The second address information comprises the number of the junction boxes subordinate to such local gateway 12 and the junction box address of each subordinate junction box. After receiving the above gateway configuration information, the local gateway 12 stores the above second address information, the configuration process of the local gateway 12 per se is completed according to the third network parameter and the fourth network parameter, and the fourth network parameter corresponding to each subordinate junction box 13 is sent to the corresponding junction box 13, so that each subordinate junction box 13 completes the configuration process per se.

For each local gateway 12 included in the solar energy system, the automatic configuration of each local gateway 12 and the automatic configuration of each junction box 13 subordinate to the local gateway 12 are respectively completed in the above mode. After the central controller 11, each local gateway 12, and each junction box 13 all complete the initialization configuration, the entire solar energy system realizes automatic networking at the communication level.

The junction box 13, the local gateway 12 and the central controller 11 also need to be applied with time synchronization with the external control system in the initialization process of the solar energy system. The specific synchronization process is to send synchronization information to the central controller 11 by the external control system such as the server cluster 30 or the user terminal 40, and the synchronization information comprises the system time of the external control system. After receiving the synchronization information, the central controller 11 adjusts the current system time per se to be the system time contained in the synchronization information. Meanwhile, the central controller 11 issues the synchronization information to each local gateway 12. After receiving the synchronization information, the local gateway 12 sets the local current system time to be the system time contained in the synchronization information. Meanwhile, the local gateway 12 sends the synchronization information to each junction box 13 subordinate to the local gateway 12. After receiving the synchronization information, the junction box 13 sets the local current system time to be the system time contained in the synchronization information. The time synchronization between all the junction boxes 13, all the local gateways 12 and the central controller 11 and the external control system is achieved by the above synchronization process.

The automatic configuration, automatic networking and automatic synchronization of the solar energy system are realized by the above initialization configuration process of the solar energy system, so that the local gateway 12 and the junction box 13 are applied with networking to enter a working state. Manual on-site parameter configuration and network settings are avoided. The initialization configuration of remote parameters is realized. The problem about large-scale deployment of the solar energy components 10 is solved. The assembling automation and assembling efficiency of the solar energy system are improved.

For the solar energy system as shown in FIG. 1, the difference of the above networking configuration process is that the network configuration information comprises the central control configuration information corresponding to the central controller 11 and the junction box configuration information corresponding to each junction box 13. The central control configuration information comprises the network parameters required for networking between the central controller 11 and the junction box 13. The central controller 11 completes the initialization process per se according to the central control configuration information, and directly sends the junction box configuration information corresponding to each junction box 13 to the junction box 13, so that each junction box 13 completes the configuration process per se. For the synchronization process, the central controller 11 issues the synchronization information to each junction box 13 while the central controller 11 completes the system time synchronization per se. After receiving the synchronization information, the junction box 13 sets the local current system time to be the system time contained in the synchronization information. The time synchronization between all the junction boxes 13 and the central controller 11 and the external control system is achieved by the above synchronization process.

After the initialization of the solar energy system is completed, the solar energy system can be automatically controlled by the external control system. The external control system sends component control information to the central controller 11. After receiving the component control information, the central controller 11 performs corresponding control operation on the devices such as the solar energy component 10 and the junction box 13 included in the solar energy system according to the component control information. The above component control information comprises a component turn-off command, a component turn-on command, a status inquiry command, or an abnormality detection command, etc. The case that the component control information is different control commands respectively is taken as an example for explanation, comprising:

### 1. The component control information is the component turn-off command.

### (1) Turn-off control over the solar energy components 10 when the external control system is the fire protection system 20.

The solar energy system provided by the embodiment of the present disclosure can be applied to a BIPV building. If the solar energy system still maintains power supply when the case such as an earthquake or a building fire accident occurs, the danger of personnel electric shock is likely to occur. In order to avoid such danger, the fire protection system 20 sends the component turn-off command to the central controller 11 when the danger such as the earthquake or fire accident is detected. The component turn-off command comprises a fire protection identification, which may be a predetermined preset character, or the device identification of a fire protection control device in the fire protection system. After receiving the component turn-off command and identifying the fire protection identification contained in the component turn-off command, the central controller 11 determines that the component to be turned off corresponding to the component turn-off command is all the solar energy components 10. When the solar energy system comprises the local gateway 12, the central controller 11 sends the turn-off command to each local gateway 12. Each local gateway 12 forwards the turn-off command to all the junction boxes 13 connected thereto, and all the junction boxes 13 receiving the turn-off command are disconnected from all the solar energy components 10 connected thereto. When the solar energy system does not comprise the local gateway 12, the central controller 11 sends the turn-off command to each junction box 13, and all the junction boxes 13 receiving the turn-off command are disconnected from all the solar energy components 10 connected thereto.

The embodiment of the present disclosure may also set an execution priority of the component turn-off command from the fire protection system 20 to be highest to immediately disconnect all the solar energy components 10 when the component turn-off command from the fire protection system 20 is received, thereby effectively avoiding the danger condition of electric leakage of the solar energy system or personnel electric shock in the event of the earthquake, the fire accident or the like.

### (2) Turn-off control over the solar energy components 10 when the external control system is the remote device such as the server or the user terminal 40.

In the scenarios such as the maintenance of the solar energy system or building surface construction, there is a case where all or part of the solar energy components 10 need to be turned off. In these scenarios, the user can send the component turn-off command to the central controller 11 by the remote device such as the server or user terminal 40. The component turn-off command comprises a component address of the component to be turned off. The component to be turned off is the solar energy component 10 needing to be turned off. When the solar energy system comprises the local gateway 12, the component address contains the interface address for the solar energy component 10 to be connected to the junction box to which the solar energy component is subordinate, the address of the junction box to which the solar energy component is subordinate, and the gateway address of the local gateway connected to the junction box. After receiving the component turn-off command, according to the component address contained in the component turn-off command, the central controller 11 determines the component to be turned off corresponding to the component turn-off command, the junction box 13 connected to the component to be turned off, and the local gateway 12 connected to the determined junction box 13. The central controller 11 sends the turn-off command to the determined local gateway 12. The turn-off command carries the interface address for the component to be turned off to be connected to the determined junction box 13. The local gateway 12 forwards the turn-off command to the junction box 13 connected to the component to be turned off. After the junction box 13 receives the turn-off command, the electric connection between the junction box 13 and the component to be turned off is disconnected according to the interface address carried by the turn-off command. When the solar energy system does not comprise the local gateway 12, the above component address contains the interface address for the solar energy component 10 to be connected to the junction box to which the solar energy component is subordinate and the address of the junction box to which the solar energy component is subordinate. The central controller 11 sends the turn-off command to the junction box 13 to which the component to be turned off is subordinate according to the junction box address to which the component to be turned off is subordinate, and the junction box 13 is disconnected from the solar energy component 10 to be turned off.

According to the above control mode, all or part of the solar energy components 10 included in the solar energy system can be remotely turned off by the remote device such as the server or the user terminal 40. In practical application, the scale of the turned off solar energy components 10 can be controlled according to requirements.

### (3) Turn-off control over the solar energy components 10 by a local turn-off button locally disposed on the central controller 11.

The central controller 11 is locally provided with the local turn-off button. In the scenario of the emergent disaster such as the fire accident or the earthquake, the user may press the local turn-off button to control the turn-off of the solar energy components 10. The central controller 11 performs real-time monitoring on the local turn-off button. When the component turn-off event triggered by the local turn-off button is monitored, it is determined that the component to be turned off corresponding to the component turn-off event is all the solar energy components 10. Similar to the turn-off of the control component of the fire protection system 20, when the solar energy system comprises the local gateway 12, the central controller 11 sends the turn-off command to all the junction boxes 13 connected to each local gateway 12 by each local gateway 12 respectively, so that all the junction boxes 13 are disconnected from all the respectively-connected solar energy components 10. When the solar energy system does not comprise the local gateway 12, the central controller 11 sends the turn-off command to each junction box 13, and all the junction boxes 13 receiving the turn-off command are disconnected from all the connected solar energy components 10.

Similarly, the response priority of the component turn-off event triggered by the local turn-off button is also set to be the highest, so that all the solar energy components 10 are immediately disconnected when the component turn-off event triggered by the local turn-off button is monitored, thereby effectively avoiding the danger condition of electric leakage of the solar energy system or personnel electric shock in the event of the earthquake, or the fire accident, etc.

### 2. The component control information is the component turn-on command.

The central controller 11 records the component address of the turned-off solar energy component 10 every time when the above turn-off control is performed, and uploads the component address of the turned-off solar energy component 10 to the external control system such as the server or the user terminal 40. After the condition, in which the solar energy component 10 needs to be turned off, such as the earthquake, the fire accident, the maintenance and overhaul, or the like is ended, the user can send the component turn-on command to the central controller 11 by the external control system such as the server or the user terminal 40. The component turn-on command comprises the component address of the component to be turned on. The component to be turned on is the solar energy component 10 needing to restore the connection. When the solar energy system comprises the local gateway 12, the component address contains the interface address for the solar energy component 10 to be connected to the junction box to which the solar energy component is subordinate, the address of the junction box to which the solar energy component is subordinate, and the gateway address of the local gateway connected to the junction box. After receiving the component turn-on command, the central controller 11 determines the component to be turned on corresponding to the component turn-on command, the junction box 13 to which the component to be turned on is subordinate, and the local gateway 12 connected to the determined the junction box 13 according to the component address contained in the component turn-on command. The central controller 11 sends the turn-on command to the determined local gateway 12. The turn-on command carries the interface address for the component to be turned on to be connected to the determined junction box 13. The local gateway 12 forwards the turn-on command to the junction box 13 to which the component to be turned on is subordinate. After the junction box 13 receives the turn-on command, the electric connection between the junction box 13 and the component to be turned on is turned on according to the interface address carried by the turn-on command, to restore the normal work of the solar energy system and reduce the loss of power generation capacity. When the solar energy system does not comprise the local gateway 12, the above component address contains the interface address for the solar energy component 10 to be connected to the junction box to which the solar energy component is subordinate and the address of the junction box to which the solar energy component is subordinate. The central controller 11 sends the turn-on command to the junction box 13 to which the component to be turned on is subordinate according to the junction box address to which the component to be turned on is subordinate. The connection between the junction box 13 and the solar energy component 10 to be turned on is turned on.

According to the above control mode, all, part or individual of the solar energy components 10 included in the solar energy system can be remotely turned on by the external control system such as the server or the user terminal 40. In practical application, the scale of the turned-on solar energy components 10 can be controlled according to requirements.

### 3. Inquiry control of component status data

The component status data comprises at least one of a component voltage, a component current, a junction box board card temperature, and a component turn off/turn on status. The junction box 13 can acquire the component status data corresponding to the solar energy component 10 connected thereto, and send the acquired component status data to the local gateway 12 connected to the junction box 13 or the central controller 11. The local gateway 12 or the central controller 11 stores the component status data after receiving the component status data.

The user may send a status inquiry command to the central controller 11 by the external control system such as the server or the user terminal 40. The status inquiry command comprises the component address of the component to be inquired. The component to be inquired is the solar energy component 10 needing the inquiry of the component status data. When the solar energy system comprises the local gateway 12, after receiving the status inquiry command, the central controller 11 determines the component to be inquired corresponding to the status inquiry command, the junction box 13 to which the component to be inquired is subordinate, and the local gateway 12 connected to the determined junction box 13 according to the component address included in the status inquiry command. The inquiry command is sent to the junction box 13 to which the component to be inquired is subordinate by the determined local gateway 12. The inquiry command carries the interface address for the component to be inquired to be connected to the determined junction box 13. After receiving the inquiry command, the junction box 13 acquires the component status data of the component to be inquired according to the interface address contained in the inquiry command, and sends the component status data to the above local gateway 12. The local gateway 12 stores the component status data and uploads the component status data to the central controller 11. When the solar energy system does not comprise the local gateway 12, after receiving the status inquiry command, the central controller 11 determines the component to be inquired corresponding to the status inquiry command and the junction box 13 to which the component to be inquired is subordinate according to the component address included in the status inquiry command. The inquiry command is sent to the junction box 13 to which the component to be inquired is subordinate. The inquiry command carries the interface address for the component to be inquired to be connected to the determined junction box 13. After receiving the inquiry command, the junction box 13 acquires the component status data of the component to be inquired according to the interface address contained in the inquiry command, and sends the component status data to the central controller 11. The central controller 11 sends the component status data to the external control system after receiving the component status data.

According to the above inquiry control mode, the component status data of any solar energy component 10 in the solar energy system can be remotely inquired by the external control system such as the server cluster 30 or the user terminal 40.

Except that the component status data of the solar energy component 10 is acquired by issuing the status inquiry command to the central controller 11 through the external control system, in the solar energy system as shown in FIG. 2, the central controller 11 may also periodically acquire the component status data of the solar energy components 10 subordinate to respective local gateways 12 from all local gateways 12, store the acquired component status data in a local database, and upload the component status data to the external control system. In the solar energy system as shown in FIG. 1, the central controller 11 may also periodically acquire the component status data of the solar energy components 10 from respective junction boxes 13, and store and upload the same to the external control system. In the embodiment of the present disclosure, the central controller 11 may acquire the data from each local gateway 12 or each junction box 13 in a polling mode. The data acquisition period can be flexibly configured according to requirements. If the data acquisition of certain local gateway 12 or certain junction box 13 fails in the polling process, then the central controller 11 reacquires the data of the local gateway 12 or the junction box 13, generates an abnormality report, and uploads the abnormality report to the external control system. In addition, in the solar energy system as shown in FIG. 2, the central controller 11 may also periodically inquire the historical data accumulated at each local gateway 12, and upload the inquired historical data to the external control system. For example, the inquiry is performed once a day or once a week, etc. Due to the communication connection between the external control system and the central controller 11, the automatic acquisition of the component status data is realized, the maintenance of the solar energy system is convenient, and there is no need for the personnel to detect the status data of the solar energy components 10 on site, thereby improving the maintenance efficiency and reducing the maintenance cost.

### 4. The component control information is an abnormality detection command.

Since the central controller 11 is in communication connection with the external control system such as the server cluster 30 or the user terminal 40, the user can perform remote abnormality detection on the solar energy components 10 included in the solar energy system by the external control system such as the server or the user terminal 40.

The user sends an abnormality detection command to the central controller 11 by the external control system such as the server or the user terminal 40. The abnormality detection command comprises a component address of the component to be detected, and the component to be detected is the solar energy component 10 to be subjected to abnormality detection. In the solar energy system as shown in FIG. 2, after receiving the abnormality detection command, the central controller 11 determines the component to be detected corresponding to the abnormality detection command, the junction box 13 to which the component to be detected is subordinate, and the local gateway 12 connected to the subordinate junction box 13 according to the component address contained in the abnormality detection command. By the determined local gateway 12, the detection command is sent to the junction box 13 to which the component to be detected is subordinate. The detection command carries the interface address for the component to be detected to be connected to the junction box 13 to which the component to be detected is subordinate. After receiving the detection command, the junction box 13 performs abnormality detection on the component to be detected, including but not limited to detection on a voltage, a current, and a turn on/turn off status of the component to be detected. The junction box 13 sends the acquired abnormality detection result to the above local gateway 12. The local gateway 12 uploads the abnormality detection result to the central controller 11. In the solar energy system as shown in FIG. 1, after receiving the abnormality detection command, the central controller 11 determines the component to be detected corresponding to the abnormality detection command and the junction box 13 to which the component to be detected is subordinate according to the component address contained in the abnormality detection command. The detection command is sent to the junction box 13 to which the component to be detected is subordinate. The detection command carries the interface address for the component to be detected to be connected to the junction box 13 to which the component to be detected is subordinate. After receiving the detection command, the junction box 13 performs abnormality detection on the component to be detected, and sends the acquired abnormality detection result to the central controller 11. The central controller 11 sends the abnormality detection result to the external control system after receiving the abnormality detection result.

According to the above abnormality detection control mode, the abnormality detection can be performed on any solar energy module 10 in the solar energy system by the external control system such as the server or the user terminal 40.

Except that the abnormality detection is performed by issuing the abnormality detection command to the central controller 11 through the external control system, in the solar energy system as shown in FIG. 2, the central controller 11 may also periodically perform the abnormality detection on the solar energy component 10 associated with each local gateway 12. When abnormality alarm information is detected, the abnormality alarm information is stored in the local database, and the abnormality alarm information is uploaded to the external control system. In addition, the central controller 11 also performs periodical abnormality detection on the local gateway 12, the junction box 13 and the solar energy component 10, performs abnormality self-test per se, and reports the detected abnormality alarm information to the external control system. The abnormality alarm information may comprise error information, prompt information, illegal operation information, and the like. In the solar energy system as shown in FIG. 1, the central controller 11 may also periodically perform abnormality detection on each junction box 13 and the solar energy component 10 connected to each junction box 13, and periodically perform abnormality self-test. The detected abnormality alarm information is reported to the external control system.

If the central controller 11 reports the abnormality alarm information to the server, the server can push the abnormality alarm information to the user terminal 40, so that maintenance personnel can know the abnormality alarm information in time. The central controller 11 can also be locally provided with an alarm device, such as an alarm bell or an indicator light, to alarm by a local sound or by illuminating the indicator light when the central controller 11 detects the abnormality alarm information. The abnormality alarm information may be displayed by a local display device, to enable the local maintenance personnel to know the abnormality alarm information.

By the above abnormality detection control, various abnormality conditions of the solar energy component 10, the local gateway 12, the junction box 13 and the central controller 11 per se can be detected. No manual on-site detection is required, thereby avoiding the personnel security risks caused by falling from a high place or electric shock in the on-site detection of BIPV system components. The workload, detection difficulty and complexity of system detection are reduced. The detection efficiency is higher and the real-time performance is higher.

### 5. The component control information is a device maintenance command.

When the system maintenance operations of adding a new local gateway 12, a new junction box 13, deleting the local gateway 12, deleting the junction box 13, updating the configuration parameters and the like occur in the solar energy system, remote maintenance control can be performed by the external control system. For example, when some local gateways 12 or junction boxes 13 in the solar energy system have a fault and are replaced, the newly replaced local gateway 12 or junction box 13 can be automatically configured by the external control system.

When the newly replaced device is the local gateway 12, a device maintenance command is sent to the central controller 11 by the external control system such as the user terminal 40 or the server. The device maintenance command comprises the gateway address and gateway configuration information of the newly replaced local gateway 12. The central controller 11 sends the gateway configuration information to the newly replaced local gateway 12 according to the gateway address included in the device maintenance command. The newly replaced local gateway 12 performs automatic configuration according to the gateway configuration information.

When the newly replaced device is the junction box 13, the device maintenance command is sent to the central controller 11 by the external control system such as the user terminal 40 or the server. The device maintenance command comprises the junction box address and the junction box configuration information of the newly replaced junction box 13. The central controller 11 determines the local gateway 12 to which the junction box 13 is subordinate according to the junction box address included in the device maintenance command, and sends the junction box configuration information to the determined local gateway 12. The local gateway 12 sends the junction box configuration information to the newly replaced junction box 13. The newly replaced junction box 13 completes automatic configuration according to the junction box configuration information.

The above merely schematically illustrates several control functions, but the remote control of the external control system over the solar energy component 10, the junction box 13, the local gateway 12, and the central controller 11 included in the solar energy system is not limited thereto.

Since the central controller 11 is connected to the remote control system such as the user terminal 40 or the server cluster 30 via the Internet, the solar energy system also has the network risks such as hacker attack or network virus attack. In order to cope with these network risks, a network switchover button is locally disposed on the central controller 11. When the network risks occur, the user can press the network switchover button to disconnect the communication connection between the solar energy system and the remote control system, thereby preventing the solar energy system from being invaded by the network risks. The central controller 11 performs real-time monitoring on the network switchover button. When the remote disconnection event triggered by the network switchover button is monitored, the communication connection with the remote control system is disconnected. When the network risks are eliminated, the user can press the network switchover button again to restore the communication connection between the solar energy system and the remote control system. When the central controller 11 monitors the remote enablement event triggered by the network switchover button, the communication connection with the remote control system is recovered. The local/remote control switchover function is realized by setting the network switchover button, thereby preventing the network risks from invading the solar energy system by the remote control system, and improving the safety and stability of the solar energy system.

The central controller 11 is in communication connection with the server cluster 30 via the Internet, and can automatically finish identity authentication on the server to ensure normal communication with the server. In addition, the central controller 11 may encrypt the data before sending the data to the server cluster 30 or the user terminal 40 via the Internet and then perform data transmission. Accordingly, the external control system may also send encrypted data to the central controller 11, and the central controller 11 performs decryption operation after receiving the encrypted data. In this way, the data security in the process of data transmission can be improved, thereby further preventing the network risks from invading the solar energy system by the external control system, and improving the security and stability of the solar energy system.

In the embodiment of the present disclosure, the central controller 11 is further locally provided with a display device configured to display system status information, alarm information, log information, version information, and the like. The system status information comprises the statistic information such as the number of the gateways, the number of the junction boxes, the online or offline status of the gateway/junction box, and the component turn on/turn off status. The module separate design is displayed in the central controller 11. Loading or not can be selected according to requirements. The central controller 1 is provided with a status display lamp for displaying an operation status of the central controller 11.

The local database disposed in the central controller 11 is configured to store component status data, abnormal alarm information, log information, system parameter information, etc. The database is designed to save limited storage resource of the central controller 11 based on an embedded design. Due to the effective addition of field indexes, the inquiry speed for the database can be improved and the inquiry experience of the user is better.

According to the embodiment of the present disclosure, the solar energy system is connected to the external control system by the central controller 11. The remote configuration, synchronization, networking, maintenance, and the like on respective component devices included in the solar energy system are realized by the external control system such as the user terminal 40 or the server. The remote control and the remote monitoring of the solar energy system in a BIPV building are realized, thereby improving the safety, stability and reliability of the solar energy system. The component status data are automatically acquired and the abnormality detection is performed remotely. The personnel on-site maintenance and inspection are reduced, and the problem of personnel safety risks caused by falling from a high place, electric shock or the like is avoided. Moreover, the central controller 11 is in communication connection with the fire protection system 20. The solar energy components 10 included in the solar energy system are controlled to be turned off by the fire protection system 20 when the accident such as a fire accident or an earthquake occurs, thereby avoiding the personnel electric shock harm caused by a high voltage of the solar energy system and improving the security performance of solar energy products.

Another embodiment of the present disclosure provides a method for controlling a solar energy system. The solar energy system on which the control method is based is as shown in FIG. 1 or 2. The implementing main body of the method is the central controller 11 included in the solar energy system provided by the above first embodiment. As shown in FIG. 4, the method specifically comprises the following steps.

In step 101: the central controller 11 receives component control information sent by an external control system.

The above external control system comprises a remote control system and a local control system. The remote control system is the system needing to be connected via the Internet, such as a server cluster 30 and a user terminal 40. The local control system is the built-in system in a place where the solar energy system is installed, such as a fire protection system 20 and a monitoring system. The server cluster 30 may be formed by multiple physical servers connected by Ethernet, or may be implemented in the form of a cloud server. The component control information may be a component turn-off command, a component turn-on command, a status inquiry command, an abnormality detection command, and the like.

In step 102: the central controller 11 performs control operation corresponding to the component control information on the solar energy component 10 connected to the junction box 13 according to the component control information.

This step can specifically perform the control operation by the following two sub-steps A1 and A2:

In A1, the central controller 11 analyzes the component control information to determine the component to be controlled corresponding to the component control information.

The above component control information comprises a component address of the component to be controlled. When the solar energy system comprises the local gateway 12, the above component address contains an interface address for the solar energy component 10 to be connected to the junction box to which the solar energy component is subordinate, the address of the junction box to which the solar energy component is subordinate, and the gateway address of the local gateway connected to the junction box. When the solar energy system does not comprise the local gateway 12, when the component control information is from the fire protection system 20, the component control information further comprises a fire protection identification, which may be a predetermined preset character or the device identification of a fire protection control device in the fire protection system.

After receiving the component control information, the central controller 11 analyzes the component control information. If it is analyzed that the component control information comprises the fire protection identification, it is determined that the component to be controlled is all the solar energy components 10. If it is determined that the component control information does not contain the fire protection identification, the component to be controlled corresponding to the component control information and the junction box 13 connected to the component to be controlled are determined according to the component address included in the component control information. If the solar energy system comprises the local gateway 12, the local gateway 12 connected to the above determined junction box 13 is also determined according to the component address.

In A2, the central controller 11 performs control operation corresponding to the component control information on the component to be controlled by the junction box 13 connected to the component to be controlled.

When the solar energy system comprises the local gateway 12, the central controller 11 sends a control command to the above determined local gateway 12. The control command carries the interface address for the component to be controlled to be connected to the determined junction box 13. The local gateway 12 forwards the control command to the junction box 13 to which the component to be controlled is subordinate. After receiving the control command, the junction box 13 performs corresponding control operation on the component to be controlled according to the interface address carried by the control command. When the solar energy system does not comprise the local gateway 12, the central controller 11 sends the control command to the above determined junction box 13. The control command carries the interface address for the component to be controlled to be connected to the determined junction box 13. After receiving the control command, the junction box 13 performs corresponding control operation on the component to be controlled according to the interface address carried by the control command.

In the embodiment of the present disclosure, the component control information is a component turn-off command, a component turn-on command, a status inquiry command, an abnormality detection command, and the like.

The following specifically describes the case where the component control information is the component turn-off command.

When the central controller 11 receives the component turn-off command, the component to be turned off corresponding to the component turn-off command is determined according to the component turn-off command. When the solar energy system comprises the local gateway 12, the turn-off command is sent to the junction box 13 connected to the component to be turned off by the local gateway 12 associated with the component to be turned off, to disconnect the junction box 13 from the component to be turned off. When the solar energy system does not comprise the local gateway 12, the turn-off command is directly sent to the junction box 13 connected to the component to be turned off, so that the junction box 13 is disconnected from the component to be turned off.

In addition, the component turn-off command may be from the fire protection system 20, the user terminal 40, or the server cluster 30, etc. The following specifically explains the scenario in which the component turn-off command is from the fire protection system 20.

The fire system 20 will not send the component turn-off command to the central controller 11 unless the disaster situation such as a fire accident or earthquake occurs generally. In the event of the disaster situation such as the fire accident or earthquake, the high voltage of the solar energy system may cause personnel electric shock or aggravation of the disaster. Therefore, the execution priority of the component turn-off command issued by the fire protection system 20 is set to be the highest priority, and the component to be turned off corresponding to the component turn-off command issued by the fire protection system 20 is preset to be all the solar energy components 10 included in the solar energy system. As shown in FIG. 5, the turn-off control over the solar energy components 10 by the fire protection system 20 is implemented by the operations of the following steps 201-203.

In step 201, the central controller 11 receives the component turn-off command from the fire protection system 20.

In step 202, the central controller 11 determines that the component to be turned off corresponding to the component turn-off command is all the solar energy components 10 according to the fire protection identification included in the component turn-off command.

In step 203, the central controller 11 sends the turn-off command to all the junction boxes 13 to disconnect all the junction boxes 13 from all the respectively connected solar energy components 10.

When the solar energy system comprises the local gateway 12, the central controller 11 sends the turn-off command to all the junction boxes 13 connected to all the local gateways 12 by each local gateway, respectively, so that all the junction boxes 13 are disconnected from respectively connected solar energy components 10. When the solar energy system does not comprise the local gateway 12, the central controller 11 directly sends the turn-off command to all the junction boxes 13 to disconnect all of the junction boxes 13 from all of the respectively connected solar energy components 10.

The above turn-off control of the fire protection system 20 can effectively avoid the danger condition such as electric leakage or personal electric shock of the solar energy system in the case of the earthquake or fire accident.

When the component turn-off command is from the remote control system such as the user terminal 40 and the server cluster 30, and when the component control information is the cases such as the component turn-on command, the status inquiry command, the abnormality detection command, networking configuration, a synchronization command and a device maintenance command, the control mode of the central controller 11 over the solar energy components 10 is the same as that described in the first embodiment, and is not repeated herein.

According to the embodiment of the present disclosure, the solar energy system is connected to the external control system by the central controller 11. The remote configuration, synchronization, networking, maintenance, and the like on respective component devices included in the solar energy system are realized by the remote control system such as the user terminal 40 or the server cluster 30. The remote control and the remote monitoring of the solar energy system in a BIPV building are realized, thereby improving the safety, stability and reliability of the solar energy system. The component status data are automatically acquired and the abnormality detection is performed remotely. The personnel on-site maintenance and inspection are reduced, and the problem of personnel safety risks caused by falling from a high place, electric shock or the like is avoided. Moreover, the central controller 11 is in communication connection with the fire protection system 20. The solar energy components 10 included in the solar energy system are controlled to be turned off by the fire protection system 20 when the accident such as a fire accident or an earthquake occurs, thereby avoiding the personnel electric shock harm caused by a high voltage of the solar energy system and improving the security performance of solar energy products.

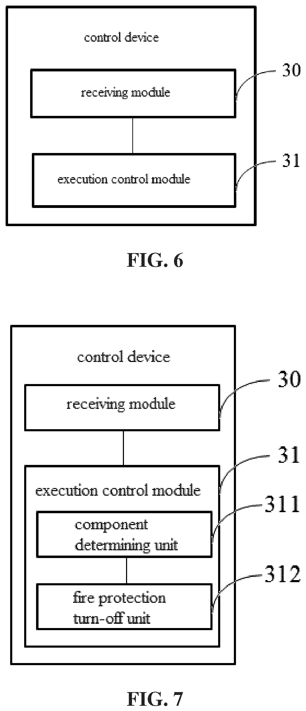

As shown in FIG. 6, an embodiment of the present disclosure provides a device for controlling a solar energy system, for performing the control method in the second embodiment. The device specifically includes:
a receiving module 30, configured to receive component control information sent by an external control system; and
an execution control module 31, configured to execute control operation corresponding to the component control information on a solar energy component 10 connected to a junction box 13 according to the component control information.

The execution control module 31 is configured to analyze the component control information, and determine a component to be controlled corresponding to the component control information; and execute the control operation corresponding to the component control information on the component to be controlled by a junction box 13 associated with the component to be controlled.

In the embodiment of the present disclosure, the component control information includes a component turn-off command, a component turn-on command, a status inquiry command or an abnormality detection command for the solar energy component.

When the component control information is the component turn-off command, the execution control module 31 is configured to determine that the component to be turned off corresponding to the component turn-off command according to the fire protection identification; and send the turn-off command to all the junction box 13, to disconnect the junction box 13 from the component to be turned off.

When the external control system is a fire protection system, the component turn-off command contains a fire protection identification. Correspondingly, as shown in FIG. 7, the execution control module 31 includes:
a component determining unit 311, configured to determine that the component to be turned off corresponding to the component turn-off command is all solar energy components 10 according to the fire protection identification; and
a fire protection turn-off unit 312, configured to send a turn-off command to all junction boxes 13, to disconnect all junction boxes from the respectively connected all solar energy components 10.

In the embodiment of the present disclosure, the device further includes: a key turn-off module, configured to perform real-time monitoring on a local turn-off key; and send the turn-off command to all junction boxes 13 when a component turn-off event triggered by the local turn-off key is monitored, to disconnect all junction boxes 13 from the respectively connected all solar energy components 10.

When the component control information is a component turn-on command, the execution control module 31 is configured to determine a component to be turned on corresponding to the component turn-on command according to the component turn-on command; and send a turn-on command to the junction box 13 to which the component to be turned on is subordinate, to turn on the connection between the junction box 13 and the component to be turned on.

When the component control information is the status inquiry command, the execution control module 31 is configured to determine a component to be inquired according to the status inquiry command; acquire component status data corresponding to the component to be inquired from a junction box 13 associated with the component to be inquired; and send the component status data to the external control system.

In the embodiment of the present disclosure, the device further includes a data acquiring module configured to periodically acquire the component status data from each junction box 13; and store the component status data in a local database, and upload the component status data to the external control system.

When the component control information is the abnormality detection command, the execution control module 31 is configured to determine a component to be detected corresponding to the abnormality detection command; send a detection command to a junction box 13 connected to the component to be detected, to cause the junction box 13 to perform abnormality detection on the component to be detected; acquire an abnormality detection result from the junction box 13 connected to the component to be detected, and send the abnormality detection result to the external control system.

The device further includes an abnormality detection module configured to periodically perform the abnormality detection on the solar energy component connected to each junction box 13; and store abnormality alarm information in the local database when the abnormality alarm information is detected, and upload the abnormality alarm information to the external control system.

In the embodiment of the present disclosure, the external control system includes a remote control system, and the device further includes network switchover module configured to perform real-time monitoring on a network switchover button; disconnect the communication connection with the remote control system when a remote disconnection event triggered by the network switchover button is monitored; resume the communication connection with the remote control system when a remote enablement event triggered by the network switchover button is monitored.

The device further includes: a configuration synchronization module configured to receive network configuration information and synchronization information sent by the external control system; perform networking configuration according to the network configuration information; and synchronize with the external control system according to the synchronization information.

In the embodiment of the present disclosure, when the solar energy system comprises the local gateway 12, the central controller 11 sends the control command to the junction box 13 by the local gateway 12. When the solar energy system does not comprise the local gateway 12, the central controller 11 directly sends the control command to the junction box 13.

When the solar energy system comprises the local gateway 12, the above network configuration module is configured to establish the communication connection with the local gateway 12 according to the network configuration information, to analyze the gateway configuration information corresponding to the local gateway 12 and the junction box configuration information corresponding to the junction box 13 connected to the local gateway 12 from the network configuration information, and to send the gateway configuration information and the junction box configuration information to the local gateway 12.

It should be appreciated that the device for controlling a solar energy system may have a corresponding specific structure and workflow as described in the method for controlling a solar energy system in the first embodiment, and specific details are not repeated here.

According to the embodiment of the present disclosure, the solar energy system is connected to the external control system by the central controller 11. The remote configuration, synchronization, networking, maintenance, and the like on respective component devices included in the solar energy system are realized by the remote control system such as the user terminal 40 or the server cluster 30. The remote control and the remote monitoring of the solar energy system in a BIPV building are realized, thereby improving the safety, stability and reliability of the solar energy system. The component status data are automatically acquired and the abnormality detection is performed remotely. The personnel on-site maintenance and inspection are reduced, and the problem of personnel safety risks caused by falling from a high place, electric shock or the like is avoided. Moreover, the central controller 11 is in communication connection with the fire protection system 20. The solar energy components 10 included in the solar energy system are controlled to be turned off by the fire protection system 20 when the accident such as a fire accident or an earthquake occurs, thereby avoiding the personnel electric shock harm caused by a high voltage of the solar energy system and improving the security performance of solar energy products.

Another embodiment of the present disclosure provides a central controller, including a processor and a memory. The memory stores at least one executable command, and the executable command is loaded and executed by the processor to implement the operations of the method for controlling a solar energy system in the first embodiment. The remote configuration, synchronization, networking, maintenance, and the like on respective component devices included in the solar energy system are realized by the central controller. The remote control and the remote monitoring of the solar energy system in a BIPV building are realized, thereby improving the safety, stability and reliability of the solar energy system. The component status data are automatically acquired and the abnormality detection is performed remotely. The personnel on-site maintenance and inspection are reduced, and the problem of personnel safety risks caused by falling from a high place, electric shock or the like is avoided. Moreover, the central controller 11 is in communication connection with the fire protection system 20. The solar energy components 10 included in the solar energy system are controlled to be turned off by the fire protection system 20 when the accident such as a fire accident or an earthquake occurs, thereby avoiding the personnel electric shock harm caused by a high voltage of the solar energy system and improving the security performance of solar energy products.

Here, the processor may include a general-purpose central processing unit (CPU), a microprocessor, an application-specific integrated circuit (ASIC), a digital signal processor (DSP), a digital signal processing device (DSPD), programmable logic device (PLD), field programmable gate array (FPGA), controller, microcontroller, or multiple integrated circuits for controlling program execution. The memory may include a Read-Only Memory (ROM) or other types of static storage devices that can store static information and instructions, a Random Access Memory (RAM) or other types of dynamic storage devices that can store information and instructions. It may also include Electrically Erasable Programmable Read-Only Memory (EEPROM), Compact Disc Read-Only Memory (CD-ROM) or other optical disk storage, optical disk storage (including compressed optical discs, laser discs, optical discs, digital universal discs, Blu-ray discs, etc.), magnetic disk storage medium or other magnetic storage devices, or any other media that can be used to carry or store desired program codes in the form of instructions or data structures and can be stored and accessed by a computer, but is not limited thereto. The memory can be arranged independently or integrated with a processor.

Another embodiment of the present disclosure provides a computer storage medium for storing computer software instructions used in the method for controlling a solar energy system in the first embodiment. The instructions include programs designed for implementing the method embodiments described above. The control method provided in the first embodiment may be implemented by executing the stored programs, to realize the remote configuration, synchronization, networking, maintenance, and the like of the solar energy system, thereby improving the safety, stability and reliability of the solar energy system. The component status data are automatically acquired and the abnormality detection is performed remotely. The personnel on-site maintenance and inspection are reduced, and the problem of personnel safety risks caused by falling from a high place, electric shock or the like is avoided. Moreover, the central controller 11 is in communication connection with the fire protection system 20. The solar energy components 10 included in the solar energy system are controlled to be turned off by the fire protection system 20 when the accident such as a fire accident or an earthquake occurs, thereby avoiding the personnel electric shock harm caused by a high voltage of the solar energy system and improving the security performance of solar energy products.

The foregoing are merely exemplary embodiments of the present disclosure, and are not intended to limit the present disclosure. Within the principles of the disclosure, any modifications, improvements, etc., are within the scope of protection of the present disclosure.

## Claims

1. A method for controlling a solar energy system, comprising:
receiving component control information sent by an external control system; and
executing a control operation corresponding to the component control information on a solar energy component (10) connected to a junction box (13) according to the component control information.

2. The method according to claim 1, wherein executing a control operation corresponding to the component control information on a solar energy component (10) connected to a junction box (13) according to the component control information comprises:
analyzing the component control information, and determining a component to be controlled corresponding to the component control information; and
executing the control operation corresponding to the component control information on the component to be controlled via a junction box (13) associated with the component to be controlled.

3. The method according to claim 1 or 2, wherein the component control information is selected from the group consisting of a component turn-off command, a component turn-on command, a status inquiry command or an anomaly detection command for the solar energy component (10).

4. The method according to claim 3, wherein the component control information is the component turn-off command; and executing a control operation corresponding to the component control information on a solar energy component (10) connected to a junction box (13) according to the component control information comprises:
determining, according to the component turn-off command, a component to be turned off corresponding to the component turn-off command; and
sending a turn-off command to the junction box (13) connected to the component to be turned off, to disconnect the junction box (13) from the component to be turned off; or
the component control information is a component turn-on command; and correspondingly, executing a control operation corresponding to the component control information on a solar energy component (10) connected to a junction box (13) according to the component control information comprises:
determining, according to the component turn-on command, a component to be turned on corresponding to the component turn-on command; and
sending a turn-on command to the junction box (13) to which the component to be turned on is subordinate, to turn on the connection between the junction box (13) and the component to be turned on.

5. The method according to claim 4, wherein the component control information is the component turn-off command, the component turn-off command contains a fire protection identification, and the external control system is a fire protection system (20); and correspondingly, executing a control operation corresponding to the component control information on a solar energy component (10) connected to a junction box (13) according to the component control information comprises:
determining that the component to be turned off corresponding to the component turn-off command is all solar energy components (10) according to the fire protection identification; and
sending the turn-off command to all junction boxes (13), to disconnect all junction boxes (13) from all solar energy components (10) connected to them.

6. The method according to any one of claims 1 to 5, further comprising:
real-time monitoring a local turn-off key; and
sending a turn-off command to all junction boxes (13) when a component turn-off event triggered by the local turn-off key is monitored, to disconnect all junction boxes (13) from all solar energy component (10) connected to them.

7. The method according to claim 3, wherein the component control information is the status inquiry command; and correspondingly, executing a control operation corresponding to the component control information on a solar energy component (10) connected to a junction box (13) according to the component control information comprises:
determining, according to the status inquiry command, a component to be inquired corresponding to the status inquiry command;
getting component status data corresponding to the component to be inquired from a junction box (13) associated with the component to be inquired; and
sending the component status data to the external control system.

8. The method according to any one of claims 1 to 7, further comprising:
periodically getting a component status data from each junction box (13); and
storing the component status data in a local database, and uploading the component status data to the external control system.

9. The method according to claim 3, wherein the component control information is the anomaly detection command; and correspondingly, executing a control operation corresponding to the component control information on a solar energy component (10) connected to a junction box (13) according to the component control information comprises:
determining, according to the abnormality detection command, a component to be detected corresponding to the abnormality detection command;
sending a detection command to a junction box (13) connected to the component to be detected, to cause the junction box (13) to perform anomaly detection on the component to be detected; and
getting an anomaly detection result from the junction box (13) connected to the component to be detected, and sending the abnormality detection result to the external control system.

10. The method according to any one of claims 1 to 9, further comprising:
periodically performing an anomaly detection on the solar energy component (10) connected to each junction box (13); and
storing abnormality alarm information in the local database when the abnormality alarm information is detected, and uploading the abnormality alarm information to the external control system.

11. The method according to claim 1, wherein the external control system comprises a remote control system, and the method further comprises:
real-time monitoring a network switchover button;
disconnecting a communication connection with the remote control system when a remote disconnection event triggered by the network switchover button is monitored; and
resuming the communication connection with the remote control system when a remote enablement event triggered by the network switchover button is monitored.

12. The method according to any one of claims 1 to 11, before receiving the component control information sent by the external control system, further comprising:
receiving a network configuration information and synchronization information sent by the external control system;
configuring networking according to the network configuration information; and
synchronizing with the external control system according to the synchronization information.

13. A device for controlling a solar energy system, comprising:
a receiving module (30), configured to receive a component control information sent by an external control system; and
an execution control module (31), configured to execute control operation corresponding to the component control information on a solar energy component (10) connected to a junction box (13) according to the component control information.

14. A central controller, comprising a processor and a memory, wherein the memory stores at least one executable command, and the executable command is loaded and executed by the processor to implement the operations executed by the method for controlling a solar energy system according to any one of claims 1 to 12.

15. A solar energy system, comprising a plurality of solar energy components (10) and at least one junction box (13), wherein each junction box (13) is connected to at least one solar energy component (10); and the solar energy system further comprises the central controller (11) according to claim 14;
the central controller (11) is connected to the at least one junction box (13); and
the central controller (11) is in communication connection with an external control system.
